# EUROPEAN PATENT APPLICATION

(11) **EP 1 662 508 A1**
(43) Date of publication of application: **31.05.2006**
(21) Application number: 05292451.1
(22) Date of filing: 18.11.2005
(51) Int. Cl.: G11B 27/00, G11B 27/02, H04N 5/00, G11B 27/10

(54) **Multimedia data playback device and driving method thereof**

(30) Priority: 22.11.2004 KR 2004095612
(71) Applicant: LG Electronics, Inc., Seoul 150-875 (KR)
(72) Inventor: Lee, Ssang soo, Gangnam-gu Seoul (KR)
(74) Representative: Loisel, Bertrand

(57) **Abstract**

A multimedia data playback device includes a recording media for storing multimedia data, a reserved replay setting unit for selecting multimedia data for a reserved replay among the stored multimedia data and setting a reserved replay list, a reserved replay list unit in which the reserved replay list set by the reserved replay setting unit is stored, and a replaying unit for performing a reserved replay according to the reserved replay list stored in the reserved replay list unit.

## Description

### BACKGROUND

### Field

This document invention relates to a multimedia data playback device and a driving method thereof.

### Description of the Related Art

Recently, multimedia data playback devices have been diversified. Recording media for storing multimedia data have been also diversified into an internal recording media, an external recording media, a portable recording media, and so on. Multimedia data playback devices which the recording media is embedded in or connected to may store incoming live multimedia data in the recording media.

In addition, the multimedia data playback devices may provide a trick play (e.g., a fast forward and a replay) of the multimedia data stored in the recording media. Meanwhile, many studies are in progress to make use of the multimedia data playback devices with various functions more efficiently.

### SUMMARY OF THE INVENTION

Accordingly, the present invention is directed to a multimedia data playback device and a driving method thereof that substantially obviate one or more problems due to limitations and disadvantages of the related art.

An object of the present invention is to provide a multimedia data playback device capable of selectively performing a reserved replay of multimedia data stored in a recording media, and a driving method thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a multimedia data playback device including: a recording media for storing multimedia data; a reserved replay setting unit for selecting multimedia data for a reserved replay among the stored multimedia data and setting a reserved replay list; a reserved replay list unit in which the reserved replay list set by the reserved replay setting unit is stored; and a replaying unit for performing a reserved replay according to the reserved replay list stored in the reserved replay list unit.

In another aspect of the present invention, there is provided a driving method of a multimedia data playback device, including: selecting multimedia data for a reserved replay among multimedia data stored in a recording media; setting a reserved replay to the selected multimedia data; and replaying the set multimedia data.

In a further aspect of the present invention, there is provided a multimedia data playback device including: a reserved replay setting unit for selecting multimedia data for a reserved replay among multimedia data stored in a recording media, and setting a reserved replay list; and a replaying unit for performing a reserved replay according to the reserved replay list set by the reserved replay setting unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of a multimedia data playback device according to an embodiment of the present invention;

Fig. 2 is a flowchart diagram illustrating a driving method of the multimedia data playback device according to an embodiment of the present invention;

Fig. 3 is an exemplary displayed view of a multimedia data list stored in a recording media of the multimedia data playback device according to the embodiment of the present invention; and

Fig. 4 is an exemplary displayed view of a multimedia data list for a reserved replay in the multimedia data playback device according to the embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

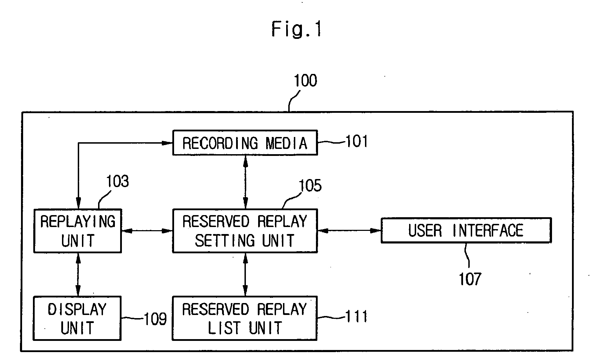

Fig. 1 is a block diagram of a multimedia data playback device according to an embodiment of the present invention.

Referring to Fig. 1, the multimedia data playback device 100 includes a recording media 101, a replaying unit 103, a reserved replay setting unit 105, a reserved replay list unit 111.

The recording media 101 stores multimedia data and it may be an internal recording media, an external recording media, or a portable recording media. Multimedia data stored in the recording media 101 may contain moving picture data, still picture data, audio data, and text data.

The reserved replay setting unit 105 selects multimedia data for reserved replay among the multimedia data stored in the recording media 101, and sets up a reserved replay list. The reserved replay setting unit 105 may select whether to perform the reserved replay of the multimedia data stored in a plurality of recording media. The reserved replay setting unit 105 may create the reserved replay list based on multimedia data stored in the internal recording media, the external recording media, and the portable recording media.

The reserved replay list created at the reserved replay setting unit 105 may be stored in the reserved replay list unit 111. The replaying unit 103 performs the reserved replay of the multimedia data according to the reserved replay list stored in the reserved replay list unit 111.

Also, the multimedia data playback device 100 may further include a user interface 107 and a display unit 109. The user interface 107 includes a function of receiving a command requested by a user. The user interface 107 includes a mechanical button, a graphic user interface (GUI), and a remote controller. The display unit 109 may display the multimedia data replayed by the replay unit 107 and also display the reserved replay list stored in the reserved replay list unit 111.

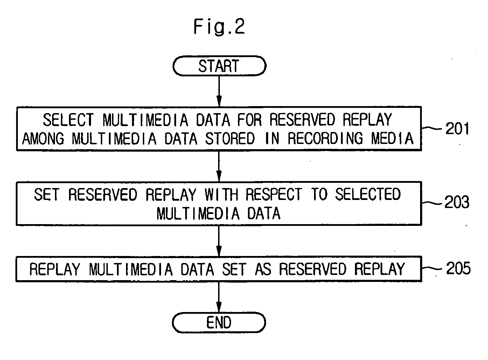

A driving method of the multimedia data playback device according to an embodiment of the present invention will be described below with reference to Fig. 2.

Fig. 2 is a flowchart diagram illustrating a driving method of the multimedia data playback device according to an embodiment of the present invention.

Referring to Fig. 2, in operation 201, multimedia data for reserved replay are selected among the multimedia data stored in the recording media.

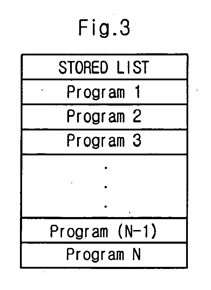

The recording media may be an internal recording media that is embedded in the multimedia data playback device. Also, the recording media may be an external recording media connected to the multimedia data playback device, or a portable recording media. The multimedia data playback device may provide the user with the multimedia data list stored in the recording media in various ways, one example of which is illustrated in Fig. 3. Fig. 3 is an exemplary displayed view of the multimedia data list stored in the recording media of the multimedia data playback device according to the embodiment of the present invention.

As shown in Fig. 3, the multimedia data playback device may display lists (Program 1, Program 2, ..., Program N) stored in the recording media. At this point, when a plurality of recording media are connected to the multimedia data playback device, multimedia data lists stored in the respective recording media may be displayed. Also, the multimedia data stored in the recording media may be classified according to genres and displayed. The stored lists may be implemented to display a variety of information such as program titles, broadcasting station names, broadcasting date, broadcasting time, broadcasting genre, and so on.

A reserved replay object is selected among the displayed multimedia data list by the user. At this point, the reserved replay object may be selected through the user interface. The user interface includes a mechanical button, a graphic user interface (GUI), and a remote controller.

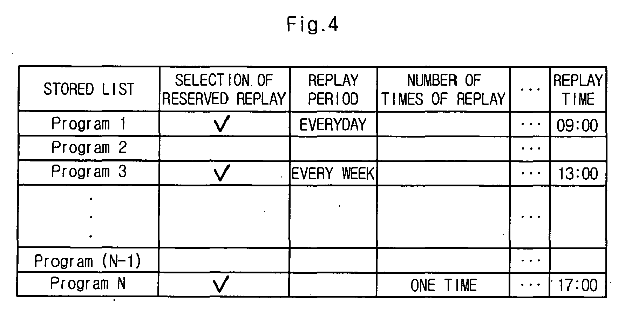

In operation 203, a reserved replay is set with respect to the multimedia data selected in operation 201. At this point, the reserved replay list may be provided to the user in various ways, one of which is illustrated in Fig. 4. Fig. 4 is an exemplary displayed view of the multimedia data list for a reserved replay in the multimedia data playback device according to the embodiment of the present invention.

The user may select various reserved replay conditions such as a replay date, a replay time, number of times of replay, a replay period, a replay order, and so on.

According to the driving method of the present invention, by setting a specific replay date and a specific replay time to the multimedia data selected as the reserved replay object, the selected multimedia may be replayed only one time at a specific time.

Also, the reserved replay may be performed in various ways.

According to the present invention, the number of times of reserved replay of the multimedia data may be selected. That is, the selected multimedia data may be replayed only one time or may be repetitively replayed several times at regular intervals. Also, the reserved replay may be repetitively performed at a specific time everyday, or at a specific time in a specific day every week.

Further, it is possible to set the replay order of the multimedia data selected as the reserved replay object. That is, the reserved replay with respect to a plurality of multimedia data may be successively performed by setting the reserved replay time and the order of the multimedia data for the reserved replay, not by setting the reserved replay to replay a specific multimedia data at a specific time. The reserved replay may be set such that the reserved replay for the multimedia data is performed only from a specific time to a specific time. According to the present invention, the replay order may be set one time such that some multimedia data are replayed only one time, and may be set several times such that some multimedia data are replayed several times.

In operation 205, the replay of the reserved multimedia data is performed with reference to the set reserved replay list.

According to the driving method of the present invention, the replay is performed according to the reserved replay list and its replay order set in operation 203. When the reserved replay with respect to the reserved replay list is finished, the multimedia data playback device may be configured such that it is automatically switched to a standby mode. Also, after the reserved replay is finished, the user may select a driving mode of the multimedia data playback device. Further, after the reserved replay is finished, the multimedia data playback device may be driven in a previous mode, that is, a mode before the reserved replay is performed.

If the multimedia data playback device according to the present invention is a digital TV, a current TV broadcasting program being received after the reserved replay is finished may be displayed.

In addition, the present invention may be applied to multimedia data playback devices, such as personal video recorder (PVR), and various formats of recording media, such as HDD, MD, DVD +R/-R, DVD +RW/-RW, memory card, and D-VHS.

As described above, the reserved replay of the multimedia data may be performed at an accurate time. That is, the desired multimedia data may be replayed in a desired place at a desired time. Accordingly, using the multimedia data stored in the recording media, broadcasting programs meeting user's taste may be organized.

The present invention may be usefully applied to exhibitions, outdoor billboards, and so on. Also, the reserved multimedia data may be replayed selectively and repetitively. Further, the multimedia data playback device may be driven in a standby mode after the reserved replay is finished, without user's additional manipulations. Accordingly, the desired multimedia data may be replayed at a desired time, thereby reducing power consumption.

It will be apparent to those skilled in the art that various modifications and variations may be made in the present invention. Thus, it is intended that the present invention covers the modifications and variations of this invention provided they come within the scope of the appended claims and their equivalent.

## Claims

1. A multimedia data playback device comprising:
a recording media for storing multimedia data;
a reserved replay setting unit for selecting multimedia data for a reserved replay among the stored multimedia data and setting a reserved replay list;
a reserved replay list unit in which the reserved replay list set by the reserved replay setting unit is stored; and
a replaying unit for performing a reserved replay according to the reserved replay list stored in the reserved replay list unit.

2. The multimedia data playback device according to claim 1, wherein the recording media includes an internal recording media, an external recording media, and a portable recording media.

3. The multimedia data playback device according to claim 1, further comprising:
a user interface for receiving a command requested from a user; and
a display unit for displaying the reserved replay list for the user.

4. The multimedia data playback device according to claim 3, wherein the user interface includes a mechanical button, a GUI (graphic user interface), and a remote controller.

5. The multimedia data playback device according to claim 1, wherein the multimedia data include moving picture data, still picture data, audio data, and text data.

6. The multimedia data playback device according to claim 1, wherein the reserved replay setting unit sets at least one of a replay date, a replay time, number of times of replay, a replay period, and a replay order with respect to the multimedia data selected as a reserved replay object.

7. The multimedia data playback device according to claim 1, wherein the reserved replay setting unit selects and sets a reserved replay object with respect to multimedia data stored in a plurality of recording media.

8. A driving method of a multimedia data playback device, comprising:
selecting multimedia data for a reserved replay among multimedia data stored in a recording media;
setting a reserved replay to the selected multimedia data; and
replaying the set multimedia data.

9. The driving method according to claim 8, wherein the recording media includes an internal recording media, an external recording media, and a portable recording media.

10. The driving method according to claim 8, wherein in setting the reserved replay, the multimedia data for the reserved replay are selected by a user command inputted through a user interface.

11. The driving method according to claim 10, wherein the user interface includes a mechanical button, a GUI (graphic user interface), and a remote controller.

12. The driving method according to claim 8, wherein the multimedia data include moving picture data, still picture data, audio data, and text data.

13. The driving method according to claim 8, wherein the setting of the reserved replay includes setting at least one of a replay date, a replay time, number of times of replay, a replay period, and a replay order with respect to the multimedia data selected as a reserved replay object.

14. The driving method according to claim 8, wherein the setting of the reserved replay includes selecting and setting a reserved replay object with respect to multimedia data stored in a plurality of recording media.

15. A multimedia data playback device comprising:
a reserved replay setting unit for selecting multimedia data for a reserved replay among multimedia data stored in a recording media, and setting a reserved replay list; and
a replaying unit for performing a reserved replay according to the reserved replay list set by the reserved replay setting unit.

16. The multimedia data playback device according to claim 15, wherein the recording media includes an internal recording media, an external recording media, and a portable recording media.

17. The multimedia data playback device according to claim 15, further comprising:
a user interface for receiving a command requested from a user; and
a display unit for displaying the reserved replay list for the user.

18. The multimedia data playback device according to claim 17, wherein the user interface includes a mechanical button, a GUI (graphic user interface), and a remote controller.

19. The multimedia data playback device according to claim 15, wherein the multimedia data include moving picture data, still picture data, audio data, and text data.

20. The multimedia data playback device according to claim 15, wherein the reserved replay setting unit sets at least one of a replay date, a replay time, number of times of replay, a replay period, and a replay order with respect to the multimedia data selected as a reserved replay object.

21. The multimedia data playback device according to claim 15, wherein the reserved replay setting unit selects and sets a reserved replay object with respect to multimedia data stored in a plurality of recording media.
